# EUROPEAN PATENT SPECIFICATION

(11) **EP 3 531 219 B1**
(45) Date of publication and mention of the grant of the patent: **18.08.2021**
(21) Application number: 18212134.3
(22) Date of filing: 13.12.2018
(51) Int. Cl.: G05B 19/042

(54) **CONTROL SYSTEM AND FUNCTIONAL UNIT**
STEUERUNGSSYSTEM UND FUNKTIONALE EINHEIT
SYSTÈME DE COMMANDE ET UNITÉ FONCTIONNELLE

(30) Priority: 27.02.2018 JP 2018033109
(43) Date of publication of application: 28.08.2019
(73) Proprietor: OMRON Corporation, Shiokoji-dori, Shimogyo-Ku Kyoto-shi Kyoto 600-8530 (JP)
(72) Inventor: Miyake, Kazunari, Kyoto 600-8530 (JP); Fujimura, Ryosuke, Kyoto 600-8530 (JP); Yagi, Daisuke, Kyoto 600-8530 (JP); Ueda, Takamasa, Kyoto 600-8530 (JP); Yoda, Yasuki, Kyoto 600-8530 (JP)
(74) Representative: Ter Meer Steinmeister & Partner

(56) References cited:
- EP-A1- 1 762 918
- JP-A- 2002 297 207
- JP-A- 2009 015 401
- JP-A- 2017 167 595
- US-A1- 2015 362 903

## Description

### BACKGROUND

### Technical Field

The present disclosure relates to a technology in which a functional unit included in a control system that is used to control an operation of a machine, a facility, or the like accesses an external memory such as a memory card.

### Description of Related Art

A machine or a facility that is used in many production sites is typically controlled by a control system including, for example, a programmable controller (programmable logic controller, hereinafter also referred to as a "PLC"). In such a control system, the PLC includes a central processing unit (CPU), and an input and output (IO) unit that is responsible for a signal input from an external switch or sensor and a signal output to an external relay or actuator.

In such a control system, setting information of each unit included in the control system is restored, and the setting information of each unit included in the control system is backed up.

Patent Document 1 discloses a PLC that starts a process of restoring setting information on the basis of insertion of a secure digital (SD) card into a CPU unit of the PLC.

### Patent Documents

[Patent Document 1] Japanese Patent Application Laid-Open No. 2014-146077

As a control system has a large number of functions, a plurality of remote IO devices can be connected to one CPU unit via a network, and the IO unit can be installed at a place separate from the CPU unit.

However, in the control system described in Patent Document 1, an access process for restoring or backing up setting information cannot be performed unless a user goes to a place at which the CPU unit has been installed in order to execute the access process.

Therefore, a place at which an operation for executing the access process is performed depends on a place at which a controller (such as the CPU unit) has been installed.

JP 2017 167595 A relates to an IO-Link master which comprises an upper-level communication control unit for accepting a backup execution instruction of obtaining setting information from a plurality of IO-Link devices and storing it in a storage unit, and a backup control unit for executing backup of the plurality of IO-Link devices according to an accepted one instruction.

EP 1 762 918 A1 relates to a programmable-controller remote terminal apparatus which shortens a system down time which occurs when replacing an I/O unit. A programmable-controller remote terminal apparatus, which is connected to a programmable controller through a fieldbus, includes a communication unit and at least one I/O unit which can communicate with the communication unit through a serial bus line, wherein the communication unit has a device which obtains information for identifying each connected I/O unit and also obtains set value information for each I/O unit. The communication unit also has a backup device which can store the obtained information of each I/O unit. If an I/O unit is replaced, the I/O unit is reinitialized with the stored information, if, for example, the I/O unit is of the same type before and after the replacement.

JP 2009 015401 A relates to a distributed control system. By sequentially reading frame configuration data stored in the PLC as a sending station in each receiving station in response to reception of a prescribed starting instruction, creating a restoration request frame, and sending it onto the field network, contents of a setting information storage means of each of the PLCs as the receiving station can be restored by remote control without operating the tool device by only providing the prescribed starting instruction to the PLC as the sending station.

### SUMMARY

The present invention provides a control system capable of freely setting a place at which an operation for executing an access process is performed independently of an installation place of a controller. The objects of the present invention are solved by the features of the independent claim. Preferred embodiments are given in the dependent claims.

According to the present invention, a control system according to claim 1 is provided.

According to the invention, by operating the input portion provided in the first functional unit, it is possible to execute at least one of the process of loading the setting information into the storage unit and the process of reading the setting information from the storage unit. As a result, the user can freely set a place at which an operation for executing the access process is performed independently of an installation place of a controller simply by changing an installation place of the first functional unit.

In an example of the disclosure, when the first functional unit generates the command, the first functional unit specifies the second functional unit on the basis of association information corresponding to the user operation received by the input portion, and transmits the command to the second functional unit.

According to this disclosure, it is possible to change the second functional unit by rewriting the association information and to easily change an execution target of the access process.

According to the invention, the first functional unit transmits the command to functional units different from the first functional unit. Each of the functional units different from the first functional unit determines whether or not the functional unit executes the access process for accessing the storage unit on the basis of the command.

According to this example, in a control system in which a recombination of functional units is frequent, it is possible to update a setting simply by changing a setting of a recombined functional unit without changing a setting of the first functional unit.

In an example of the disclosure, the control system includes a plurality of storage units. The input portion further receives a selection of a storage unit that is accessed by the second functional unit. The second functional unit executes the access process for accessing the storage unit selected by the input portion according to the command.

According to this example, it is possible to select an arbitrary storage unit from a plurality of storage units as an access destination of the second functional unit.

In an example of the disclosure, the input portion further receives a designation of a plurality of functional units as the second functional unit.

According to this example, it is possible to execute the access process of a plurality of second functional units in a single operation.

In an example of the disclosure, the first functional unit further includes a notification portion capable of notifying of an execution situation of the access process.

According to this example, the user can confirm an execution situation of the access process without moving from a place at which an operation for executing the access process has been performed.

According to another example of the present disclosure, a functional unit that operates on the basis of predetermined setting information is provided. The functional unit includes a communication control unit that controls communication with a controller communicatively connected to another functional unit and a storage unit; an input portion that receives a user operation; and a generation unit that generates a command for executing at least one of a process of loading the setting information of a specific one or each of a plurality of functional units into the storage unit and a process of reading the setting information from the storage unit as an access process when the input portion receives execution of the access process for accessing the storage unit from the specific one or the plurality of functional units according to the user operation. When the generation unit generates the command, the communication control unit transmits the command to a second functional unit designated according to the user operation received by the input portion.

According to this example, by operating the input portion provided in the first functional unit, it is possible to execute at least one of the process of loading the setting information into the storage unit and the process of reading the setting information from the storage unit. As a result, the user can freely set a place at which an operation for executing an access process is performed independently of an installation place of a controller simply by changing an installation place of the first functional unit.

A place at which an operation for executing the access process is performed can be set freely independently of an installation place of a controller.

### BRIEF DESCRIPTION OF THE DRAWINGS

FIG. 1 is a diagram schematically illustrating an application scene of a control system according to an embodiment.
FIG. 2 is a schematic diagram illustrating a schematic configuration of the control system according to the embodiment.
FIG. 3 is a schematic diagram illustrating a connection configuration of a remote IO device according to the embodiment.
FIG. 4 is a schematic diagram illustrating a hardware configuration of a communication coupler of the remote IO device according to the embodiment.
FIG. 5 is a schematic diagram illustrating a hardware configuration of an IO unit of the remote IO device according to the embodiment.
FIG. 6 is a schematic diagram illustrating a hardware configuration of an input unit of the remote IO device according to the embodiment.
FIG. 7 is a schematic diagram illustrating a hardware configuration of a CPU unit according to the embodiment.
FIG. 8 is a diagram illustrating an overview of a process that is performed by operating a switch according to the embodiment.
FIG. 9 is a schematic diagram illustrating an example of a software configuration of a functional unit capable of executing an access process in executing the access process according to the embodiment.
FIG. 10 is a schematic diagram illustrating an example of a software configuration of an input unit in executing the access process according to the embodiment.
FIG. 11 is a diagram illustrating an example of a functional configuration of each functional unit that functions in executing an access process according to the embodiment.
FIG. 12 is a sequence chart illustrating the access process according to the embodiment.
FIG. 13 is a schematic diagram illustrating a hardware configuration of a support device connected to a CPU unit according to this embodiment.
FIG. 14 is a diagram illustrating an example of a screen on a display of the support device connected to the CPU unit according to the embodiment.
FIG. 15 is a diagram illustrating an example of a control system including a plurality of input units.
FIG. 16 is a diagram illustrating an example of a functional configuration of an IO unit in a second modification example.

### DESCRIPTION OF THE EMBODIMENTS

An embodiment of the present disclosure will be described in detail with reference to the drawings. It should be noted that the same or corresponding units in the figures are denoted by the same reference numerals and description thereof will not be repeated.

### §1 Application example

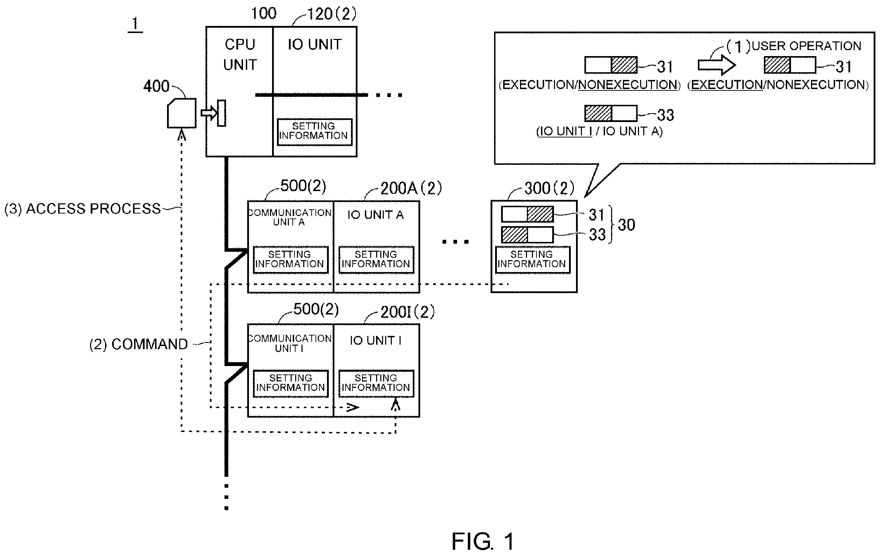

First, an example of a scene to which the present disclosure is applied will be described with reference to FIG. 1. FIG. 1 is a diagram schematically illustrating an application scene of a control system 1 according to the embodiment.

The control system 1 includes a storage unit 400, a CPU unit 100 that functions as a controller, and a plurality of functional units 2. The CPU unit 100 is communicatively connected to the storage unit 400. In addition, each functional unit 2 is communicatively connected to the CPU unit 100, and operates on the basis of predetermined setting information.

The storage unit 400 is a recording medium, and the medium that stores information such as a program according to an electrical, magnetic, optical, mechanical, or chemical action so that a computer, another device, machines, or the like can read recorded information such as the program. The storage unit 400 includes an external memory directly connectable to the CPU unit 100, a server connected to the CPU unit 100 via a network, and an internal memory such as a hard disk included in the CPU unit 100.

Connections between the CPU unit 100 and the storage unit 400 include a connection via an internal bus, a connection via a network, and a connection via an interface.

Connections between the functional unit 2 and the CPU unit 100 include a connection via an internal bus and a connection via a network. Further, connections between the functional units 2 also include a connection via an internal bus and a connection via a network.

The functional unit 2 includes an input unit 300 including an input portion that receives a user operation. The functional unit 2 includes, for example, IO units 120 and 200, the input unit 300, a servo unit, a communication unit, and a special unit. In the embodiment, an IO unit connected to the CPU unit 100 via an internal bus is an IO unit 120, and an IO unit connected to the CPU unit 100 via a network is an IO unit 200. A communication coupler 500 is an example of a communication unit.

The input unit 300 may include only a function of receiving an input from the input portion, or may further include functions included in the IO unit, the communication unit, the servo unit, the special unit, and the like. The input portion is configured of, for example, a DIP switch or a rotary switch. In the embodiment, the input portion is described as being the DIP switch (switch 30). Further, it is assumed that the input unit 300 does not have functions included in the IO unit, the communication unit, the servo unit, the special unit, and the like. In other words, the input unit 300 will not be described as including an input portion provided for the IO unit, the communication unit, the servo unit, the special unit, or the like. In FIG. 1, oblique lines indicate that a selection is made in the input portions.

Among the plurality of functional units 2, the functional unit 2 specified according to the user operation received by the input portion can execute an access process for accessing the storage unit 400. The access process is a process including at least one of a process of reading data into the storage unit 400 and a process of reading data from the storage unit 400.

For example, the input unit 300 may include a plurality of switches 30. Specifically, the input unit 300 includes a first switch 31 that receives execution of the access process and a third switch 33 that receives an operation for specifying the functional unit 2 that executes the access process for accessing the storage unit 400. It should be noted that, although the first switch 31 and the third switch 33 are included, a configuration in which only one switch is included may be adopted. In this case, one or a plurality of functional units 2 that execute the access process are determined in advance, and when the input portion receives the execution of the access process, the one or the plurality of functional units 2 that have been determined in advance may execute the access process. Further, an input portion including a plurality of channels such as a rotary switch may be used as the input portion. In this case, the one or the plurality of functional units 2 may be determined for each channel in advance, and the one or the plurality of functional units 2 corresponding to the selected channel may execute the access process.

A process of the switch from the reception of the execution of the access process to the execution of the access process will be described in an order of (1) to (3) in FIG. 1.
(1) When the first switch 31 receives the execution of the access process according to the user operation, the input unit 300 generates a command for executing the access process. This command may be a command indicating only a signal received by the switch 30 or may be a command indicating a part or all of the content of the access process. In the example illustrated in FIG. 1, it is assumed that an IO unit 2001 has been selected as an execution target of the access process according to the user operation received by the third switch 33, at a timing when the first switch 31 receives the execution of the access process.
(2) The IO unit 2001 receives the command generated by the input unit 300. The input unit 300 may multicast the generated command to the execution targets of the access process when the input unit 300 can specify the execution targets of the access process on the basis of an operation with respect to the third switch 33 or may broadcast the generated command. When the input unit 300 cannot specify the execution targets of the access process on the basis of the operation with respect to the third switch 33, the input unit 300 broadcasts the command indicating the signal received by the switch 30, and each of functional units 2 which have received the command determines whether or not the functional unit 2 is to execute the access process on the basis of the signal received by the switch 30.
(3) On the basis of the received command, the IO unit 2001 executes at least one of a process of reading setting information of the IO unit 2001 into the storage unit 400 and a process of reading the setting information from the storage unit 400 as the access process for accessing the storage unit 400. As an example of the access process, the IO unit 2001 performs a process of backing up the setting information of the IO unit 2001 to the storage unit 400 or a process of restoring the setting information of the IO unit 2001 to the setting information stored in the storage unit 400. For example, the IO unit 2001 can transmit a command for executing the access process to the CPU unit 100, and the CPU unit 100 can access the storage unit 400 to execute the access process for accessing the storage unit 400.

The input unit 300 illustrated in FIG. 1 corresponds to an example of a "first functional unit" of the present disclosure, and the IO unit 2001 corresponds to an embodiment of a "second functional unit" of the present disclosure.

Thus, by operating the input portion provided in the first functional unit, it is possible to execute at least one of the process of loading the setting information into the storage unit and the process of reading the setting information from the storage unit. As a result, the user can freely set a place at which an operation for executing the access process is performed independently of an installation place of a controller simply by changing an installation place of the first functional unit.

### §2 Specific example

Hereinafter, a more detailed configuration and process of the control system 1 according to the embodiment will be described as a specific example of the present disclosure.

### <A. Overall configuration example of control system 1>

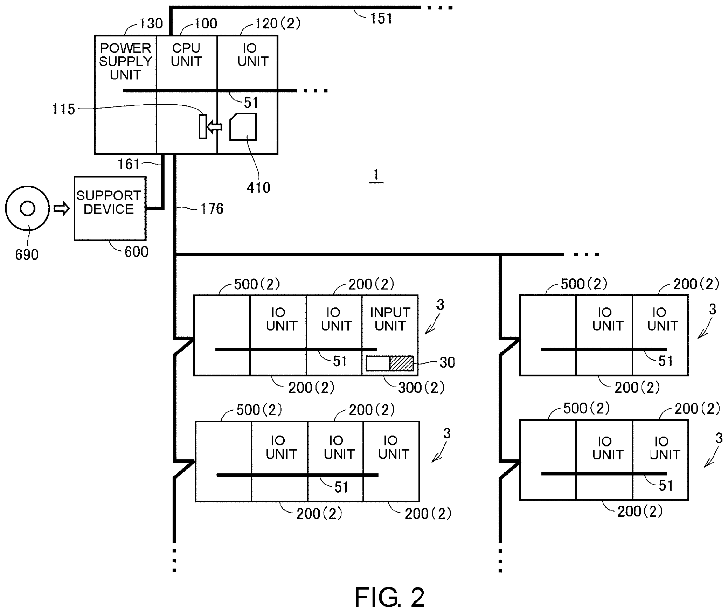

FIG. 2 is a schematic diagram illustrating a schematic configuration of the control system 1 according to the embodiment. The control system 1 includes a CPU unit 100 and a remote IO device 3 connected to the CPU unit 100 via a field network 176. The control system 1 may include at least one remote IO device 3 or may include a plurality of remote IO devices 3. Further, the control system 1 may include a plurality of CPU units 100. In this case, the respective CPU units 100 are communicatively connected to each other via a high-level network 151. The control system 1 illustrated in FIG. 2 includes a plurality of remote IO devices 3.

The CPU unit 100 can be connected to the functional unit 2 such as a power supply unit 130 and an IO unit 120 via an internal bus 51. The power supply unit 130 supplies power with an appropriate voltage to each unit. The CPU unit 100 executes a main calculation process. The CPU unit 100 and each functional unit 2 are configured to be able to exchange data with each other via the internal bus 51. The CPU unit 100 is communicatively connected to a support device 600 via a connection cable 161 or the like. The functional unit 2 connected to the CPU unit 100 via the internal bus 51 specifically includes an IO unit, a communication unit, a special unit, and a servo unit.

The IO unit is a unit regarding a general input and output process, and serves to input or output binarized data such as ON/OFF. The IO unit collects information indicating any one of a state in which a sensor such as a detection switch is detecting a certain target (ON) and a state in which the sensor is detecting no target (OFF). In addition, the IO unit outputs any one of an activation command (ON) and a deactivation command (OFF) to an output destination such as a relay or an actuator.

The communication unit has a function of communicating with another PLC. The communication unit decodes data sent from the high-level network 151 and encodes data to be transmitted to the high-level network 151.

The special unit has functions not supported by the IO unit, such as input and output of analog data, temperature control, PID (Proportional-Integral-Differential) control, pulse counting, servo control, inverter control, and communication using a specific communication scheme (for example, serial communication or encoder input).

Further, a memory card interface (IF) 115 for mounting a memory card 410 which is an example of the storage unit 400 is provided in the CPU unit 100. The backup data sent from each functional unit 2, backup data for restoration to be transmitted to each functional unit 2, and the like are stored in the memory card 410.

The field network 176 transfers various pieces of data that are exchanged with the CPU unit 100. Typically, various Ethernets (registered trademark) for industry can be used as the field network 176.

It should be noted that although FIG. 2 illustrates the control system 1 including both the internal bus 51 and the field network 176, a system configuration having only one of the internal bus 51 and the field network 176 mounted therein can also be adopted. For example, all the units may be connected by the field network 176. Alternatively, all the functional units 2 may be connected directly to the internal bus 51 without using the field network 176.

The remote IO device 3 is intended to allow expansive disposition of the functional unit 2 that is mounted on the CPU unit 100, at a position different from a disposition position of the CPU unit 100. More specifically, the remote IO device 3 includes a communication coupler 500 for performing a process regarding data transfer in the field network 176, and one or more functional units 2. Each unit included in the remote IO device 3 is configured to be able to exchange data with the others via the internal bus 51. Further, the remote IO device 3 can be set irrespective of the position of the CPU unit 100.

The communication coupler 500 is an example of a functional unit 2 functioning as a communication unit. Further, the communication coupler 500 controls an operation (such as a data updating timing) of each functional unit 2 connected via the internal bus 51.

The functional unit 2 included in the remote IO device 3, which can communicate with the communication coupler 500, can communicate with the CPU unit 100 via the communication coupler 500. That is, the functional unit 2 included in the remote IO device 3, which can communicate with the communication coupler 500, is communicatively connected to the CPU unit 100.

At least one functional unit 2 among the plurality of functional units 2 communicatively connected to the CPU unit 100 functions as the input unit 300 including the switch 30 which is an example of an input portion that receives a user operation. In the embodiment, the input unit 300 is communicatively connected to the CPU unit 100 via the field network 176, the communication coupler 500, and the internal bus 51. It should be noted that the input unit 300 may be connected to the CPU unit 100 via the internal bus 51.

In the embodiment, it is assumed for convenience of description that the functional unit 2 other than the input unit 300 connected to the communication coupler 500 via the internal bus 51 does not include another type of unit other than the IO unit 200. However, the functional unit 2 may include another type of unit such as a special unit, a servo unit, or a communication unit.

### <B. Hardware configuration of remote IO device 3>

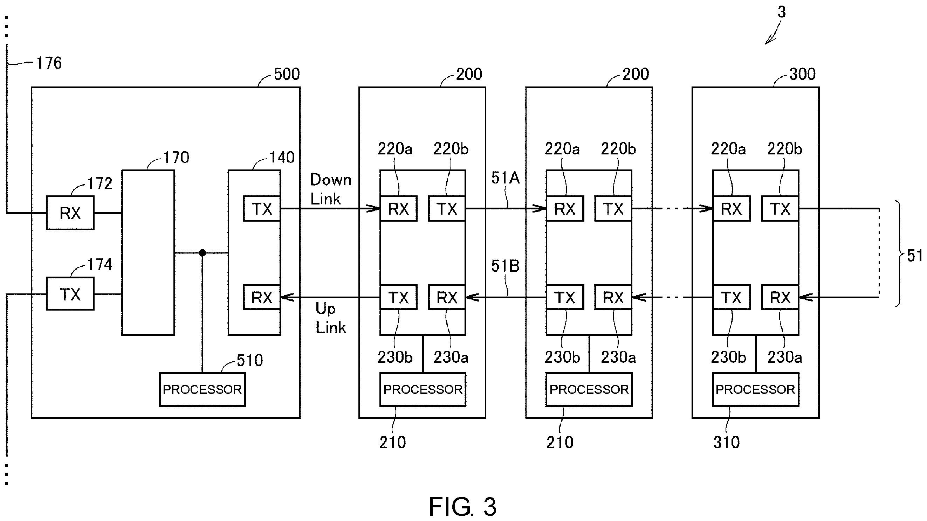

A hardware configuration of the remote IO device 3 will be described with reference to FIGS. 3 to 6.

### (b1. Connection configuration of remote IO device 3)

FIG. 3 is a schematic diagram illustrating a connection configuration of the remote IO device 3 according to the embodiment. It is assumed that the remote IO device 3 illustrated in FIG. 3 includes the input unit 300. As illustrated in FIG. 3, in the remote IO device 3, the communication coupler 500, one or more IO units 200, and the input unit 300 are connected to each other to be able to transfer data via the internal bus 51 (a downlink 51A and an uplink 51B) which is a communication line. That is, the remote IO device 3 includes a plurality of units (the communication coupler 500, the IO unit 200, and the input unit 300) connected via the internal bus 51.

As an example, in the downlink 51A and the uplink 51B, serial communication is adopted and data that is a target is transferred in a form aligned in a line in time series. More specifically, in the downlink 51A, data is transmitted in one direction from the communication coupler 500 to the IO unit 200 and the input unit 300 via the downlink 51A. On the other hand, in the uplink 51B, data is transmitted in one direction from the IO unit 200 and the input unit 300 to the communication coupler 500 via the uplink 51B.

In the embodiment, data is transmitted as a frame including header information. Each frame includes one or more blocks. The header information includes information indicating a priority of data in the frame.

When each IO unit 200 receives a frame transferring via the downlink 51A or the uplink 51B, the IO unit 200 decodes data from the frame and executes a necessary process. Each IO unit 200 generates the frame again and then retransmits (forwards) the frame to the IO unit 200 or the input unit 300 at the next stage.

When the input unit 300 receives the frame transferred via the downlink 51A or the uplink 51B, the input unit 300 decodes the data from the frame and executes a necessary process, similar to the IO unit 200. The input unit 300 generates the frame again and retransmits (forwards) the frame to the IO unit 200 at the next stage.

In order to realize such sequential transfer of the frames including data, each IO unit 200 includes a reception unit (hereinafter also referred to as "RX") 220a and a transmission unit (hereinafter also referred to as "TX") 220b with respect to the downlink 51A, and includes a reception unit 230a and a transmission unit 230b with respect to the uplink 51B. The reception units 230a and 220a receive data transmitted as a frame from another unit via the internal bus 51 which is a communication line. The transmission units 230b and 220b transmit data as a frame to another unit via the internal bus 51 which is a communication line. Each IO unit 200 includes the processor 210 which is a control unit, and the processor 210 controls processing of these pieces of data.

The input unit 300 includes a processor 310, reception units 220a and 230a, and transmission units 220b and 230b. Since a basic configuration related to data transfer of the input unit 300 is the same as that of the IO unit 200, description of corresponding units (denoted by the same reference numerals) will not be repeated. The processor 310 controls processing of data transmitted and received by the input unit 300 and processing based on a signal from the switch 30.

The communication coupler 500 includes a processor 510, a field bus control unit 170, a reception unit 172, a transmission unit 174, and an internal bus control unit 140. That is, the communication coupler 500 is not only connected to the internal bus 51 (the downlink 51A and the uplink 51B), but also connected to the field network 176 which is a high-level communication network via the reception unit 172 and the transmission unit 174. The field bus control unit 170 manages data transfer via the field network 176, and the internal bus control unit 140 manages data transfer via the internal bus 51.

### (b2. Configuration of communication coupler 500)

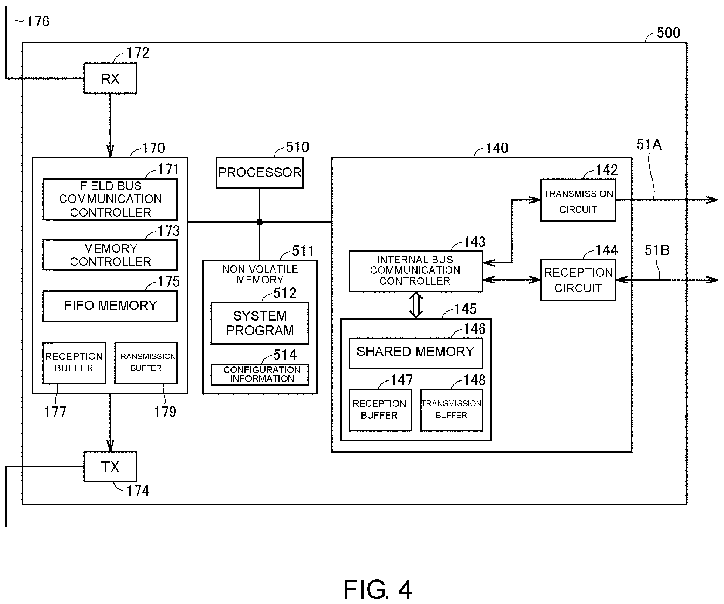

FIG. 4 is a schematic diagram illustrating a hardware configuration of the communication coupler 500 of the remote IO device 3 according to the embodiment. As illustrated in FIG. 4, the communication coupler 500 of the remote IO device 3 includes a processor 510, a nonvolatile memory 511, a field bus control unit 170, a reception unit 172, a transmission unit 174, and an internal bus control unit 140.

The reception unit 172 receives a high-level communication frame transmitted from the CPU unit 100 via the field network 176, decodes the high-level communication frame into data, and outputs the data to the field bus control unit 170. The transmission unit 174 generates the high-level communication frame from the data output from the field bus control unit 170 again and retransmits (forwards) the high-level communication frame via the field network 176.

The field bus control unit 170 transmits and receives data to and from another device (the CPU unit 100 and the other remote IO device 3) in each predetermined control cycle via the field network 176 in cooperation with the reception unit 172 and the transmission unit 174. More specifically, the field bus control unit 170 includes a field bus communication controller 171, a memory controller 173, and a first in first out (FIFO) memory 175, a reception buffer 177, and a transmission buffer 179.

The field bus communication controller 171 interprets a command or the like transmitted from the CPU unit 100 via the field network 176 and executes a process necessary for realization of communication via the field network 176. Further, the field bus communication controller 171 performs copying of data from the high-level communication frame sequentially stored in a FIFO memory 175, and a data writing process for the high-level communication frame.

The memory controller 173 is a control circuit that realizes a function such as dynamic memory access (DMA), and controls writing and reading of data to and from the FIFO memory 175, the reception buffer 177, the transmission buffer 179, and the like.

The FIFO memory 175 temporarily stores the high-level communication frames received via the field network 176, and sequentially outputs the high-level communication frames according to a stored order.

The reception buffer 177 extracts data to be output to the IO unit 200 and/or the input unit 300 connected to the own device among the data included in the high-level communication frame sequentially stored in the FIFO memory 175, and temporarily stores the data. The reception buffer 177 stores, for example, backup data for restoration sent from the CPU unit 100 and data indicating an execution log for a backup process.

The transmission buffer 179 temporarily stores process data sent from the IO unit 200 and/or the input unit 300, which is data to be written to a predetermined area of the high-level communication frame sequentially stored in the FIFO memory 175. The transmission buffer 179 stores, for example, data for executing the access process that is executed on the basis of an operation with respect to the switch 30.

The processor 510 issues an instruction to the field bus control unit 170 and the internal bus control unit 140 and controls, for example, data transfer between the field bus control unit 170 and the internal bus control unit 140.

The nonvolatile memory 511 stores a system program 512 and a configuration information 514 of the remote IO device 3.

The internal bus control unit 140 transmits and receives a frame (data) to and from the IO unit 200 and/or the input unit 300 via the internal bus 51 (the downlink 51A and the uplink 51B).

More specifically, the internal bus control unit 140 includes an internal bus communication controller 143, a transmission circuit 142, a reception circuit 144, and a storage device 145.

The internal bus communication controller 143 manages data transfer via the internal bus 51 independently (as a master).

The transmission circuit 142 generates and transmits a frame flowing on a downlink of the internal bus 51 according to an instruction from the internal bus communication controller 143. The reception circuit 144 receives a frame flowing on an uplink of the internal bus 51 and outputs the frame to the internal bus communication controller 143.

The storage device 145 corresponds to a buffer memory that stores a frame (data) that is transferred via the internal bus 51. More specifically, the storage device 145 includes a shared memory 146, a reception buffer 147, and a transmission buffer 148. The shared memory 146 temporarily stores data that is exchanged between the field bus control unit 170 and the internal bus control unit 140. The reception buffer 147 temporarily stores data received from the IO unit 200 and/or the input unit 300 via the internal bus 51. The transmission buffer 148 temporarily stores data included in the high-level communication frame received by the field bus control unit 170.

### (b3. Configuration of IO unit 200)

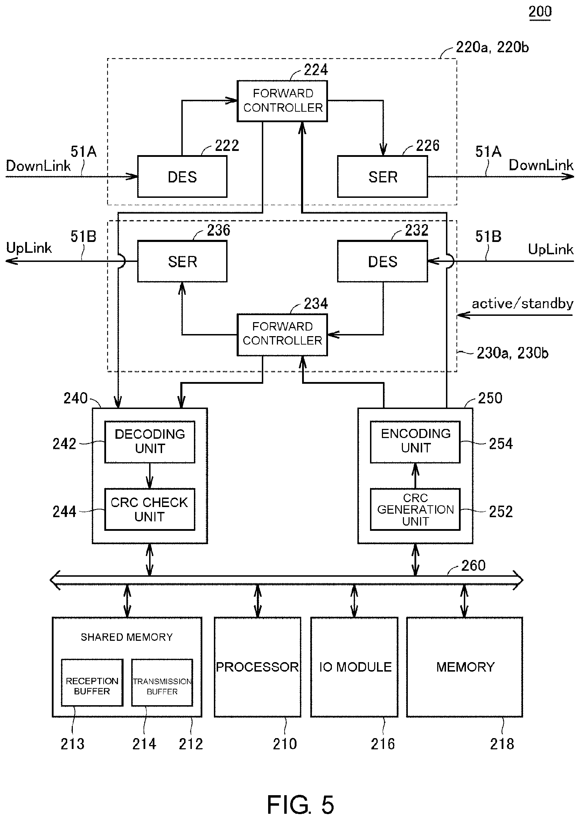

FIG. 5 is a schematic diagram illustrating a hardware configuration of the IO unit 200 of the remote IO device 3 according to the embodiment. As illustrated in FIG. 5, each of the IO units 200 of the remote IO device 3 includes inverse serializers (de-serializer, hereinafter also referred to as a "DES unit") 222 and 232, serializers (SER: hereinafter also referred to as a "SER unit") 226 and 236, and forward controllers 224 and 234. Further, each of the IO units 200 includes a reception processing unit 240, a transmission processing unit 250, a processor 210, a shared memory 212, an IO module 216, and a memory 218, which are connected to each other via a bus 260. The memory 218 includes, for example, a volatile memory and a nonvolatile memory.

The DES unit 222, the forward controller 224, and the SER unit 226 correspond to the reception unit 220a and the transmission unit 220b of the downlink 51A illustrated in FIG. 3. That is, these units execute a process related to transmission and reception of frames flowing through the downlink 51A. Similarly, the DES unit 232, the forward controller 234, and the SER unit 236 correspond to the reception unit 230a and the transmission unit 230b of the uplink 51B illustrated in FIG. 3. That is, these units execute a process related to transmission and reception of frames flowing through the uplink 51B.

The reception processing unit 240 includes a decoding unit 242 and a CRC check unit 244. The decoding unit 242 decodes the received frame into data according to a predetermined algorithm. The CRC check unit 244 performs an error check (for example, cyclic redundancy check (CRC) code) on the basis of a frame check sequence (FCS) or the like that is added to an end of the frame.

The transmission processing unit 250 is connected to the forward controllers 224 and 234 and performs generation of a frame to be retransmitted (forwarded) to the IO unit 200 or the input unit 300 at the next stage, timing control, or the like according to an instruction from the processor 210 or the like. In addition, the transmission processing unit 250 generates data to be transmitted to the IO unit 200 or the input unit 300 at the next stage in cooperation with the processor 210 or the like. More specifically, the transmission processing unit 250 includes a CRC generation unit 252 and an encoding unit 254. The CRC generation unit 252 calculates an error control code (CRC) for data from the processor 210 or the like, and adds the error control code (CRC) to a frame in which the data is stored. The encoding unit 254 encodes the data from the CRC generation unit 252 and outputs encoded data to the corresponding forward controller 224 or 234.

The processor 210 is a computing entity that independently controls the IO unit 200. More specifically, the processor 210 executes a pre-stored program or the like to store a frame received via the reception processing unit 240 into the shared memory 212 or to read predetermined data from the shared memory 212 and output the data to the transmission processing unit 250 so that a frame is generated.

The shared memory 212 includes a reception buffer 213 for temporarily storing the frame received via the reception processing unit 240, and a transmission buffer 214 for temporarily storing a frame to be transmitted via the transmission processing unit 250. Further, the shared memory 212 includes an area for storing various pieces of data.

The IO module 216 receives an input signal from an external switch or sensor and writes a value of the input signal to the shared memory 212, and outputs the signal to an external relay or actuator according to a value written to the corresponding area of the shared memory 212. That is, the IO module 216 includes at least one of an input portion that collects a state value (IN data) of an externally input signal and an output portion that outputs a signal having a designated state value (OUT data). The memory 218 stores various pieces of data. For example, the memory 218 holds setting information, and data for executing various applications.

### (b4. Configuration of input unit 300)

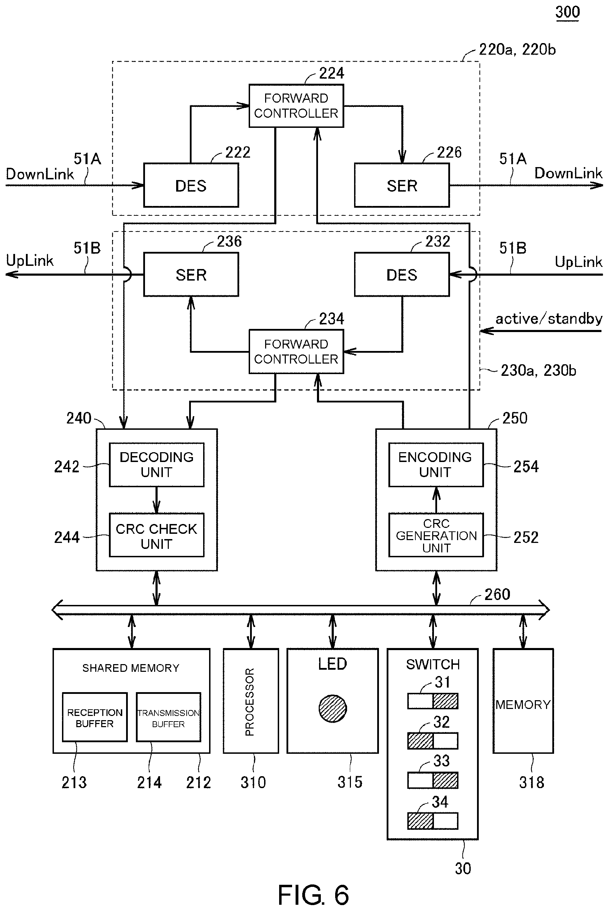

FIG. 6 is a schematic diagram illustrating a hardware configuration of the input unit 300 of the remote IO device 3 according to the embodiment. As illustrated in FIG. 6, the input unit 300 includes a DES unit 222, a forward controller 224 and a SER unit 226 corresponding to the reception unit 220a and the transmission unit 220b for the downlink 51A illustrated in FIG. 3, and a DES unit 232, a forward controller 234, and a SER unit 236 corresponding to the reception unit 230a and the transmission unit 230b for the uplink 51B. Further, the input unit 300 includes a reception processing unit 240, a transmission processing unit 250, a processor 310, a shared memory 212, a memory 318, an LED (light emitting diode) 315, and a switch 30 that is an example of an input portion, which are connected to each other via the bus 260. Since a basic configuration related to data transfer of the input unit 300 is the same as that of the IO unit 200 (FIG. 5), description of corresponding units (denoted by the same reference numerals) will not be repeated.

The processor 310 is a computing entity that independently controls the input unit 300. More specifically, the processor 310 executes a pre-stored program or the like to thereby store the frame received via the reception processing unit 240 into the shared memory 212 or to read predetermined data from the shared memory 212 and output the data to the transmission processing unit 250 so that a frame is generated.

The switch 30 includes four switches 31, 32, 33, and 34 having different assigned functions. When the switch 30 is operated, the functional unit 2 can execute an access process for accessing the memory card 410.

The LED 315 functions as a notification portion that notifies the user of an execution situation of the access process by the lighting mode. For example, the LED 315 may be turned OFF when the access process is not executed, and the LED 315 may blink when the access process is being executed.

The memory 318 stores various pieces of data. For example, the memory 318 holds setting information, and data for executing various applications.

### <C. Hardware configuration of CPU unit 100>

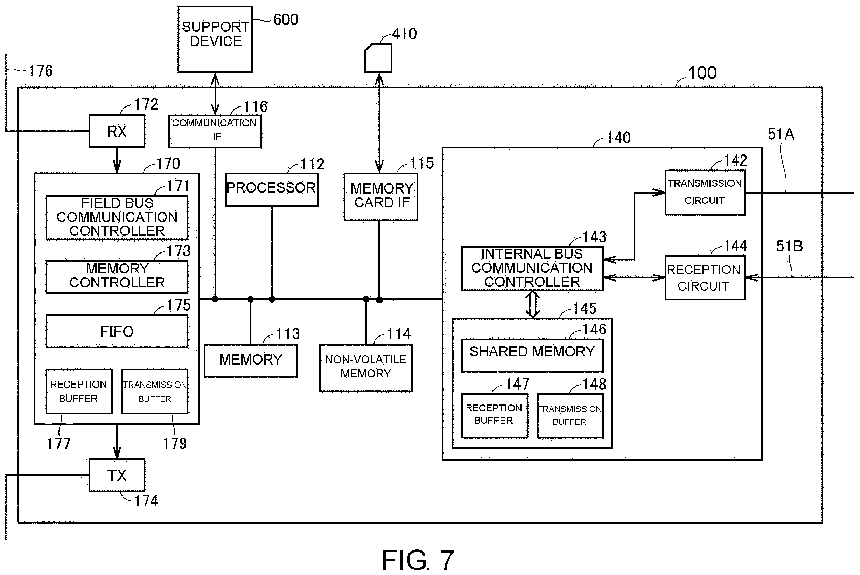

FIG. 7 is a schematic diagram illustrating a hardware configuration of the CPU unit 100 according to the embodiment. The CPU unit 100 includes a processor 112, a memory 113, a nonvolatile memory 114, a field bus control unit 170, a reception unit 172, a transmission unit 174, an internal bus control unit 140, a memory card IF 115, and a communication IF 116. Since a basic configuration related to data transfer of the CPU unit 100 is the same as that of the communication coupler 500 (FIG. 4) described above, description of corresponding units (denoted by the same reference numerals) will not be repeated.

The processor 112 executes a user program related to control of a target. More specifically, the processor 112 reads the user program from the nonvolatile memory 114 or the like, develops the user program in the memory 113, and executes the user program. By executing this user program, the processor 112 executes a process of backing up the setting information of the functional unit 2 to the memory card 410 that is an example of the storage unit, a process of restoring the setting information stored in the memory card 410 to each functional unit 2, a process of transmitting various pieces of data for executing the access process to each functional unit 2, and the like.

The memory card IF 115 is an interface for mounting the memory card 410 which is a storage medium, and mediates data transfer between the processor 112 and the memory card 410. The memory card 410 stores backup data sent from each functional unit 2, backup data for restoration to be transmitted to each functional unit 2, and the like.

The communication IF 116 mediates data transfer between the processor 112 and the support device 600. Specifically, the communication IF 116 is a USB (Universal Serial Bus) connector or the like for connection with the support device 600.

### <D. Execution of access process>

By operating the switch 30, the user can cause the IO unit 200 communicatively connected to the CPU unit 100 to execute an access process for accessing the storage unit 400. Hereinafter, an overview of a process that is performed by operating the switch 30, a software configuration included in each IO unit 200 in executing the access process, an example of a functional configuration of each IO unit 200 functioning in executing the access process, and a flow of access process will be described.

### (d1. Overview of process)

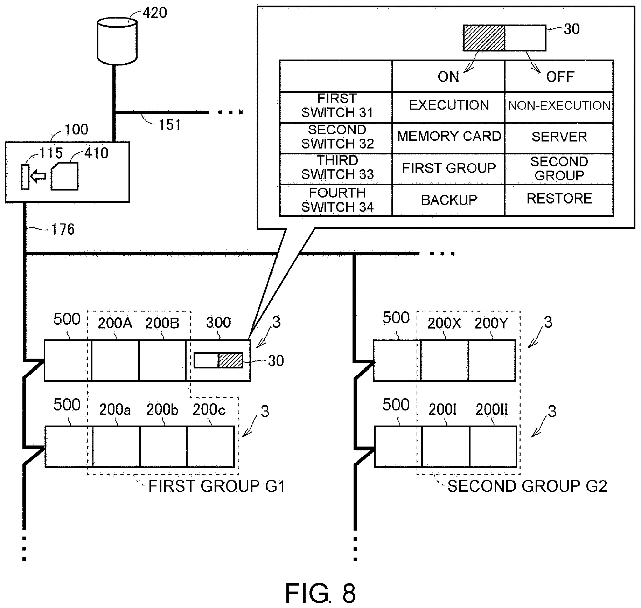

FIG. 8 is a diagram illustrating an overview of a process that is performed by operating the switch 30 according to the embodiment. The user can cause the specific IO unit 200 to execute the access process by operating the switch 30. The input unit 300 includes a plurality of switches 31 to 34 having different functions. The functions of the respective switches 31 to 34 will be described.

The first switch 31 is a switch for selecting execution or non-execution of the access process. The input unit 300 generates a command for executing an access process according to conditions that are defined according to signals from a second switch 32 to a fourth switch 34 on the basis of the user having selected "ON" of the first switch 31.

The second switch 32 is a switch for selecting an access destination of the functional unit 2. Specifically, when the CPU unit 100 is able to communicate with a plurality of storage units 400, the second switch 32 receives a selection of the storage unit 400 to be accessed by the IO unit 200 from the plurality of storage units 400.

For example, in the example illustrated in FIG. 8, when the CPU unit 100 can communicate with the memory card 410 and the server 420, the user can select one of the memory card 410 and the server 420 as the access destination by operating the second switch 32. When the user turns "ON" the second switch 32, the user can select the memory card 410 as an access destination, and when the user turns "OFF" the second switch 32, the user can select the server 420 as an access destination. It should be noted that the access destination can be selected from a plurality of storage units 400 or can be selected from a plurality of files included in one storage unit.

The third switch 33 is a switch for selecting the IO unit 200 that accesses the storage unit 400. For example, in the example illustrated in FIG. 8, the control system 1 includes a plurality of remote IO devices 3, and each remote IO device 3 includes a plurality of IO units 200. In this case, a group of IO units 200 consisting of one or a plurality of IO units 200 can be selected as the IO unit 200 that accesses the storage unit 400.

For example, in the example illustrated in FIG. 8, a first group G1 including the IO units 200A, 200B, 200a, 200b, and 200c and a second group G2 including the IO units 200X, 200Y, 2001, and 200II are assumed to be set in advance. When the user turns "ON" the third switch 33, the user can select all the IO units 200 included in the first group G1, and when the user turns "OFF" the third switch 33, the user can select all the IO units 200 included in the second group G2. It should be noted that, although it is assumed that a plurality of IO units 200 can be selected by operating the third switch 33, a configuration in which only one IO unit 200 can be selected may be adopted. By operating the third switch 33, the IO unit 200 that executes the access process is specified.

The fourth switch 34 is a switch for selecting content of an application that is executed as the access process. For example, in the example illustrated in FIG. 8, the user can select execution of a backup process as the access process when the user turns "ON" the fourth switch 34 and can select execution of a restoration process as the access process when the user turns "OFF" the fourth switch 34. Here, the access process is a process that can be realized by the IO unit 200 storing data into the storage unit 400 or reading data from the storage unit 400 via the CPU unit 100.

For example, in the example illustrated in FIG. 8, when the first switch 31 is turned "ON" in a state in which the second switch 32 is turned "ON", the third switch 33 is turned "ON", and the fourth switch 34 is turned "ON", backup data of the setting information of the IO units 200A, 200B, 200a, and 200b included in the first group G1 is stored into the memory card 410. On the other hand, when the first switch 31 is turned "ON" in a state in which the second switch 32 is turned "OFF", the third switch 33 is turned "OFF", and the fourth switch 34 is turned "OFF", the setting information of the IO units 200X, 200Y, 2001, and 200II included in the second group G2 is restored to the setting information stored in the server 420.

Function settings of the respective switches 31 to 34 can be performed using the support device 600. When execution of the access process is selected according to operation with respect to the first switch 31, the input unit 300 generates a command for executing the access process according to the conditions that are defined on the basis of the signals from the second switch 32 to the fourth switch 34. For example, the input unit 300 transmits the generated command to the IO unit 200 identified according to the operation with respect to the third switch 33. When the IO unit 200 receives the command sent from the input unit 300, the IO unit 200 executes an access process according to the received command.

### (d2. Software configuration of IO unit 200 capable of executing access process)

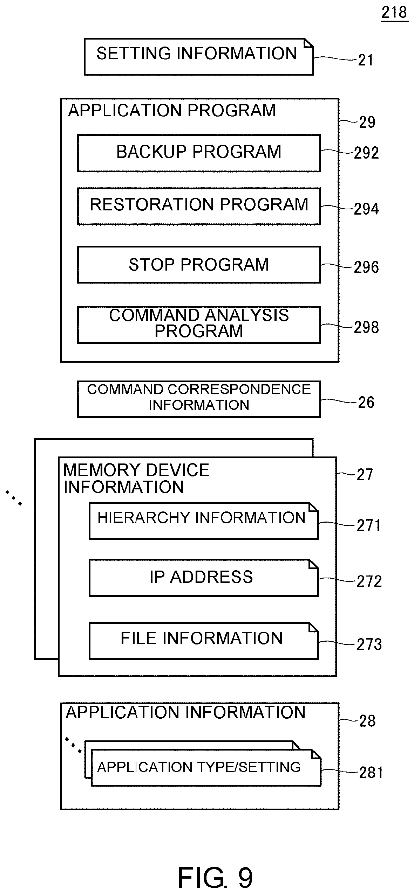

FIG. 9 is a schematic diagram illustrating an example of a software configuration included in the IO unit 200 capable of executing the access process in executing the access process according to the embodiment. The example of the software configuration included in the functional unit 2 will be described with the IO unit 200 as an example in FIG. 9. As illustrated in FIG. 9, setting information 21, an application program 29, a command correspondence information 26, a memory device information 27, and an application information 28 are stored as information for executing the access process in the memory 218 of the IO unit 200.

The IO unit 200 operates on the basis of the setting information 21. That is, the setting information 21 is information including set values or programs necessary for an operation of the IO unit 200.

The application program 29 includes a program for executing the access process. For example, the application program 29 includes a backup program 292, a restoration program 294, a stop program 296, and a command analysis program 298.

The backup program 292 is a program for backing up the setting information 21. When an application to execute backup is selected according to an operation with respect to the fourth switch 34, the functional unit 2 backs up the setting information 21 according to the backup program 292.

The restoration program 294 is a program for restoring the setting information 21. When an application to execute the restoration is selected according to an operation with respect to the fourth switch 34, the functional unit 2 restores the setting information 21 to the setting information 21 stored in the storage unit 400 according to the restoration program 294.

The stop program 296 is a program for stopping the operation of the functional unit 2. For example, a program for stopping the operation of the functional unit 2 is included as an application that can be selected through an operation with respect to the fourth switch 34, and when the application is selected, the functional unit 2 stops an operation according to the stop program 296.

The command analysis program 298 is a program for analyzing a command sent from the input unit 300. The functional unit 2 analyzes the command sent from the input unit 300 according to the command analysis program 298, and executes a process of executing the access process according to a result of the analysis.

The command correspondence information 26 indicates information meant by the command that is transmitted by the input unit 300. In greater detail, the IO unit 200 specifies the access destination and the type of application from the command correspondence information 26 on the basis of the signals from the second switch 32 and the fourth switch 34. For example, an indication that a signal corresponding to "ON" from the second switch 32 means that the access destination is the memory card 410, a signal corresponding to "OFF" means that the access destination is the server 420, a signal corresponding to "ON" from the fourth switch 34 indicates execution of a backup process, and a signal corresponding to "OFF" indicates execution of a restoration process is stored in the memory 318 as the command correspondence information 26.

The memory device information 27 is information for specifying the storage unit 400, and is stored in the memory 218 for each type of storage unit 400. The memory device information 27 includes hierarchy information 271 indicating a layer in the entire control system 1 on which the CPU unit 100 connected to the storage unit 400 is located, and an IP (Internet Protocol) address 272 of a device to which the storage unit 400 is connected, and file information 273 of the storage unit 400.

In the application information 28, an application type/setting 281 indicating content of execution and a setting of the application is stored for each type of application. The application type/setting 281 may be information different among the respective IO units 200. Specifically, a configuration in which a storage condition or a storage range, a method of designating a file name at the time of storing, and the like may be changed for each IO unit 200 that accesses the storage unit 400 may be adopted.

### (d3. Software configuration of input unit 300)

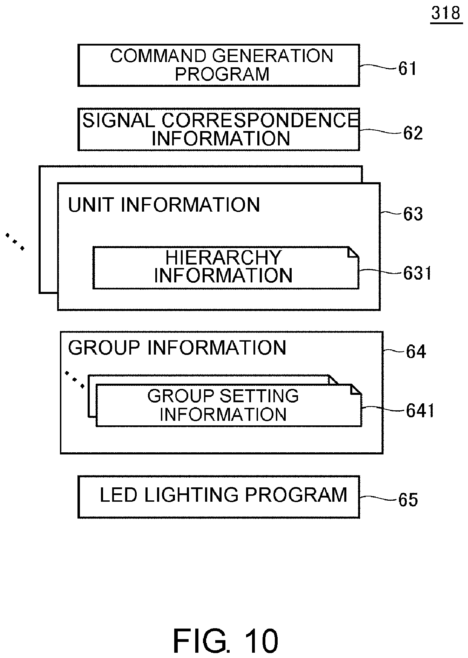

FIG. 10 is a schematic diagram illustrating an example of a software configuration of the input unit 300 in executing the access process according to the embodiment. As illustrated in FIG. 10, a command generation program 61, signal correspondence information 62, unit information 63, group information 64, and LED lighting program 65 are stored in the memory 318 of the input unit 300 as information for instructing execution of the access process.

The command generation program 61 is a program for generating a command for executing an access process according to conditions defined on the basis of the signals from the second switch 32 to the fourth switch 34.

Information corresponding to each of the signals from the switches 31 to 34 is stored in the signal correspondence information 62. Specifically, an indication that a signal corresponding to "ON" from the first switch 31 means execution of the access process, a signal corresponding to "OFF" means non-execution of the access process, a signal corresponding to "ON" from the third switch 33 indicates the first group G1, and a signal corresponding to "OFF" indicates the second group G2 is stored in the memory 318 as the signal correspondence information 62.

The unit information 63 includes hierarchy information 631 indicating an address of the functional unit 2 that can execute the access process and is stored for each functional unit 2 that can execute the access process.

In the group information 64, group setting information 641 capable of specifying the functional units 2 included in one group is stored for each group. It should be noted that the group setting information 641 may be information on a group other than the group assigned to "ON" and "OFF" of the second switch 32. For example, a third group G3, a fourth group G4, ... and information on a plurality of groups may be stored in the group information 64, in addition to the first group G1 and the second group G2.

### (d4. Functional configuration of functional unit 2)

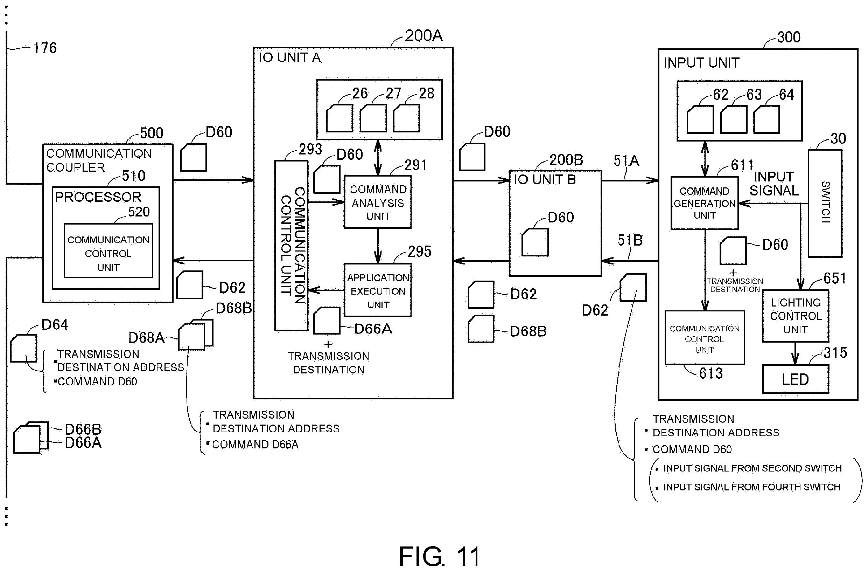

FIG. 11 is a diagram illustrating an example of a functional configuration of each functional unit 2 that functions in executing the access process according to the embodiment.

A process that is executed by each functional unit 2 when the first switch 31 is switched from "OFF" to "ON", that is, execution of the access process is received according to a user operation will be described with reference to FIG. 11.

The input unit 300 includes a command generation unit 611, a communication control unit 613, and a lighting control unit 651. The processor 310 achieves a function of the command generation unit 611 by developing the command generation program 61 in the memory 318 and executing the command generation program 61. The processor 310 achieves a function of the lighting control unit 651 by developing the LED lighting program 65 in the memory 318 and executing the LED lighting program 65. A function of the communication control unit 613 is achieved by the reception units 220a and 230a, the transmission units 220b and 230b, the reception processing unit 240, the transmission processing unit 250, the shared memory 312, and the processor 310.

(1-1) The command generation unit 611 determines that the first switch 31 has been switched from "OFF" to "ON" on the basis of the input signal input from the switch 30, and generates a command D60 on the basis of the first switch 31 having been switched from "OFF" to "ON".

The command generation unit 611 determines a transmission destination of the command D60 on the basis of an input signal from the third switch 33 and generates the command D60 capable of specifying input signals from the second switch 32 and the fourth switch 34.

The command generation unit 611 specifies the group indicated by the input signal from the third switch 33 on the basis of the signal correspondence information 62 and specifies the unit included in the specified group on the basis of the group information 64. The command generation unit 611 acquires an address of the specified unit from the unit information 63. Thus, the command generation unit 611 can determine a transmission destination.

The command generation unit 611 transmits the command D60 to the communication control unit 613 in order to transmit the command D60 to the unit determined to be the transmission destination. The command generation unit 611 may generate the command D60 for each unit determined to be a transmission destination and send the command D60 to the communication control unit 613.

In the example illustrated in FIG. 11, it is assumed that the command generation unit 611 sends the information capable of specifying the transmission destination and the generated command D60 to the communication control unit 613.

(1-2) Further, the lighting control unit 651 determines that the first switch 31 has been switched from "OFF" to "ON" on the basis of the input signal input from the switch 30, and causes the LED 315 to blink at 1 s cycles on the basis of the first switch 31 having been switched from "OFF" to "ON".

(2) The communication control unit 613 reconfigures the frame in order to transmit the command D60 to each transmission destination, and transmits the frame to the communication coupler 500 via the uplink 51B. For example, the communication control unit 613 transmits, to the communication coupler 500, a command D62 indicating that the command D60 is to be transmitted to a specific unit. Further, the communication control unit 613 also controls a timing at which the command D62 is transmitted.

(3) The communication coupler 500 includes a communication control unit 520. The communication control unit 520 performs a process of transmitting the command D60 to each unit on the basis of the command D62 sent from the communication control unit 613 of the input unit 300. When the communication control unit 520 transmits the command D60 to a unit connected via the internal bus 51, the communication control unit 520 reconfigures the frame and transmits the command D60 to each unit via the downlink 51A. For example, in the example illustrated in FIG. 11, it is assumed that the communication control unit 520 transmits the command D60 to the IO unit 200A and an IO unit 200B.

Further, when the communication control unit 520 transmits the command D60 to a unit connected, via the internal bus 51, to another communication coupler 500 or CPU unit 100 connected via a field network, the communication control unit 520 generates a command D64 indicating that the command D60 is transmitted to the unit, reconstructs a high-level frame, and sends the command D64 to the communication coupler 500 or the CPU unit 100 via the field network 176.

It should be noted that the communication control unit 520 controls each of a timing at which the command D60 is transmitted and a timing at which the command D64 is transmitted.

(4) The IO unit 200 capable of executing the access process includes a command analysis unit 291, an application execution unit 295, and a communication control unit 293. It should be noted that, for convenience of description, it is assumed that the IO unit 200A has received the command D60.

When the communication control unit 293 receives the command D60 directed to the communication control unit 293, the communication control unit 293 transfers the command D60 to the command analysis unit 291. A function of the communication control unit 293 is achieved by the reception units 220a and 230a, the transmission units 220b and 230b, the reception processing unit 240, the transmission processing unit 250, the shared memory 312, and the processor 210.

(5) The command analysis unit 291 specifies the input signals from the second switch 32 and the fourth switch 34 from D60, and determines the execution condition of the access process on the basis of the specified input signals. The processor 210 develops the command analysis program 298 in the memory 218 and executes the command analysis program 298, thereby achieving the function of the command analysis unit 291.

The command analysis unit 291 specifies the access destination indicated by the input signal from the second switch 32 on the basis of the command correspondence information 26 and specifies an address of the specified access destination on the basis of the memory device information 27. In addition, the command analysis unit 291 specifies a type of application indicated by the input signal from the fourth switch 34 on the basis of the command correspondence information 26, and specifies content of execution of the specified application on the basis of the application information 28.

(6) The command analysis unit 291 sends the specified access destination and content of the execution of the application to the application execution unit 295. The processor 210 achieves a function of the application execution unit 295 by developing at least one program among the backup program 292, the restoration program 294, and the stop program 296 in the memory 218 and executing the at least one program.

(7) The application execution unit 295 executes a process on the basis of the access destination and the content of the execution of the application sent from the command analysis unit 291. The application execution unit 295 generates a command D66A for executing a access process of accessing the storage unit 400 to the CPU unit 100 communicatively connected to the storage unit 400 that is the access destination, and transmits the command D66A and information capable of specifying the CPU unit 100 capable of communicating with the storage unit 400 that is the access destination to the communication control unit 293. That is, the application execution unit 295 transmits, to the communication control unit 293, the command D66A and the transmission destination to which the command D66A is to be transmitted.

(8) On the basis of the information sent from the application execution unit 295, the communication control unit 293 reconfigures the frame in order to transmit the command D66A to the CPU unit 100 capable of communicating with the storage unit 400 that is the access destination, and transmits the frame to the communication coupler 500 via the uplink 51B. For example, the communication control unit 293 transmits, to the communication coupler 500, a command D68A indicating that the command D66A is to be transmitted to the specific CPU unit 100. It should be noted that the communication control unit 293 controls a timing at which the command D68A is transmitted.

(9) The communication control unit 520 of the communication coupler 500 specifies the CPU unit 100 to which the commands D66A and D66B are to be transmitted, from the commands D68A and D68B. The communication control unit 520 reconfigures a high-level frame and transmits the commands D66A and D66B to the CPU unit 100 via the field network 176. It should be noted that the communication control unit 520 controls a timing at which the commands D66A and D66B are transmitted.

(10) The CPU unit 100 performs a process in which each of the IO units 200A, 200B, ... accesses the storage unit 400 according to the commands D66A, D66B, ... sent via the field network 176.

### (d5. Flow of process)

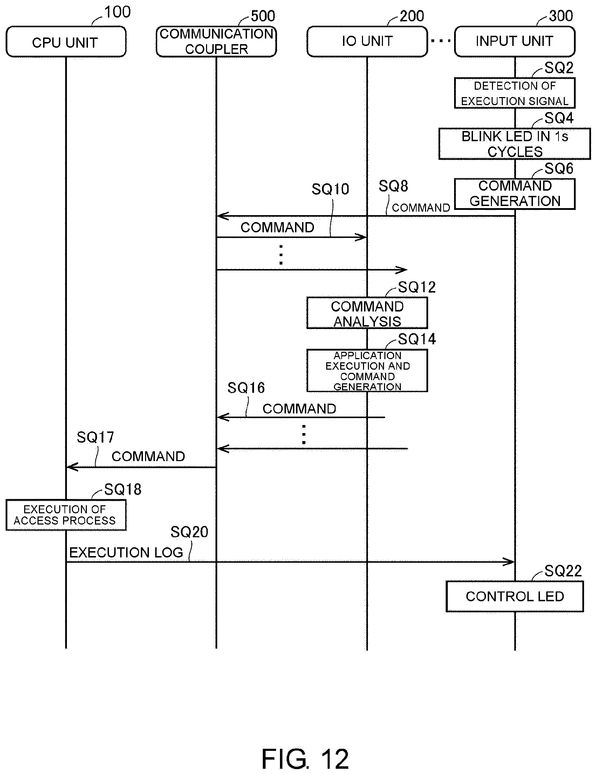

A flow of the access process will be described with reference to FIG. 12. FIG. 12 is a sequence chart illustrating the access process according to the embodiment. In sequence SQ2, the input unit 300 detects that the first switch 31 is switched from "OFF" to "ON" (also referred to as "detects an execution signal"). In sequence SQ4, the input unit 300 causes the LED 315 to blink in 1 s cycles. Accordingly, the user can recognize that the execution of the access process has started.

In sequence SQ6, the input unit 300 generates a command on the basis of the input signal from the switch 30. In this case, the input unit 300 may further generate a command indicating that an execution log regarding the process corresponding to the input signal is sent to the input unit 300 at constant cycles until the process is completed.

In sequence SQ8, the input unit 300 transmits the generated command to the communication coupler 500.

In sequence SQ10, the communication coupler 500 transmits the received command to the IO unit 200 specified according to the operation with respect to the third switch 33 on the basis of information of the command.

In sequence SQ12, the IO unit 200 having received the command analyzes the received command. The IO unit 200 analyzes the command to determine the content of the execution of the application.

In sequence SQ14, the IO unit 200 having received the command executes the application according to the determined content of the execution of the application to generates a command corresponding to the application. When the IO unit 200 performs backup, the IO unit 200 generates backup data according to the content of the execution and generates a command to store the generated backup data. When the IO unit 200 performs restoration, the IO unit 200 generates a command to request transmission of setting information in order to perform the restoration. In addition, the IO unit 200 specifies the storage unit 400 that is an access destination from the received command.

In sequence SQ16, the IO unit 200 transmits the generated command and information on the storage unit 400 that is the access destination (for example, an address of the CPU unit 100 that can communicate with the storage unit 400) to the communication coupler 500.

In sequence SQ17, the communication coupler 500 transmits the command sent from each IO unit 200 to the CPU unit 100 capable of communicating with the storage unit 400 that is the access destination.

In sequence SQ18, the CPU unit 100 having received the command executes a process according to the command. For example, when backup is performed, the backup data is stored into the storage unit 400 under designated storage conditions. When restoration is performed, the setting information is read from the storage unit 400 and the read setting information is transferred according to the command.

In sequence SQ20, the CPU unit 100 transmits an execution log indicating an execution situation regarding a process based on the received command to the input unit 300 in constant cycles. It should be noted that when the CPU unit 100 cannot directly communicate with the input unit 300, the CPU unit 100 transmits the execution log to the input unit 300 via the communication coupler 500.

In sequence SQ22, the input unit 300 controls the LED 315 on the basis of the execution log. Specifically, when the input unit 300 has detected an abnormality on the basis of the execution log, the input unit 300 causes the LED 315 to blink in 0.5 s cycles. Further, when the input unit 300 has detected the end of the process on the basis of the execution log, the input unit 300 turns OFF the LED 315. It should be noted that although the execution log is transmitted by the CPU unit 100, a configuration in which the execution log is transmitted by the IO unit 200 that has received a command from the input unit 300 may be adopted, and a configuration in which the execution log is transmitted from any of the CPU unit 100 and the IO unit 200 may be adopted. That is, there is no problem in a realizing means as long as the input unit 300 is configured to be able to monitor an execution situation of a process.

### <E. Setting of access process>

By operating the support device 600, the user can set the content of processing to be executed by operating the switches 31 to 34.

### (e1. Hardware configuration of support device 600)

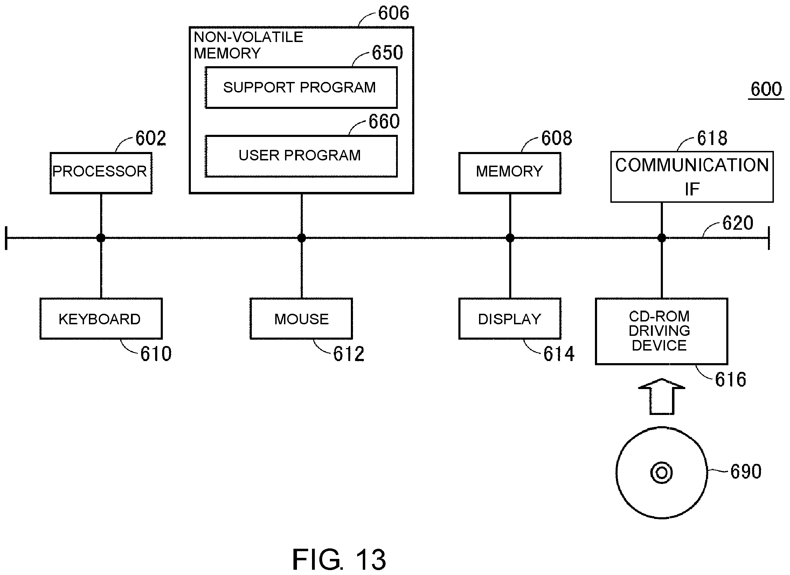

FIG. 13 is a schematic diagram illustrating a hardware configuration of the support device 600 that is connected to the CPU unit 100 according to the embodiment. The support device 600 is typically configured of a general-purpose computer.

As illustrated in FIG. 13, the support device 600 includes a processor 602 that executes various programs including an operating system (OS), a memory 608 that stores data necessary for execution of the programs in the processor 602, and a nonvolatile memory 606 that holds the programs that are executed in the processor 602, a basic input output system (BIOS), various pieces of data, and the like.

A support program 650 for realizing functions that are provided by the support device 600 is stored in the nonvolatile memory 606. A program that is executed by the support device 600, such as the support program 650, is stored and distributed in a CD-ROM (Compact Disc-Read Only Memory) 690. The program stored in the CD-ROM 690 is read by a CD-ROM driving device 616 and stored in the nonvolatile memory 606 or the like. Alternatively, a configuration in which the program is downloaded from a host computer at a higher level or the like through a network may be adopted.

The support device 600 is connected to the CPU unit 100 via a communication IF 618, and the processor 602 executes the support program 650, thereby acquiring the memory device information 27 and the unit information 63. In addition, the user generates a user program 660 by using the support program 650. The user program 660 is a program for realizing the execution of the access process. Specifically, various programs (the command generation program 61, the signal correspondence information 62, the group information 64, the application program 29, the command correspondence information 26, and the application information 28) and the like necessary for execution of the access process are uploaded by the processor 602 executing the user program 660.

The support device 600 further includes a keyboard 610 and a mouse 612 that receive an operation from the user, and a display 614 for presenting information to the user. Further, the support device 600 includes a communication interface (IF) 618 for communicating with the CPU unit 100 or the like.

The support device 600 receives an operation from the user, executes the user program 660 on the basis of information on the received operation, and performs various settings of the access process.

The components constituting the support device 600 are coupled to each other via a path 620.

### (e2. UI (User Interface) in support device 600)

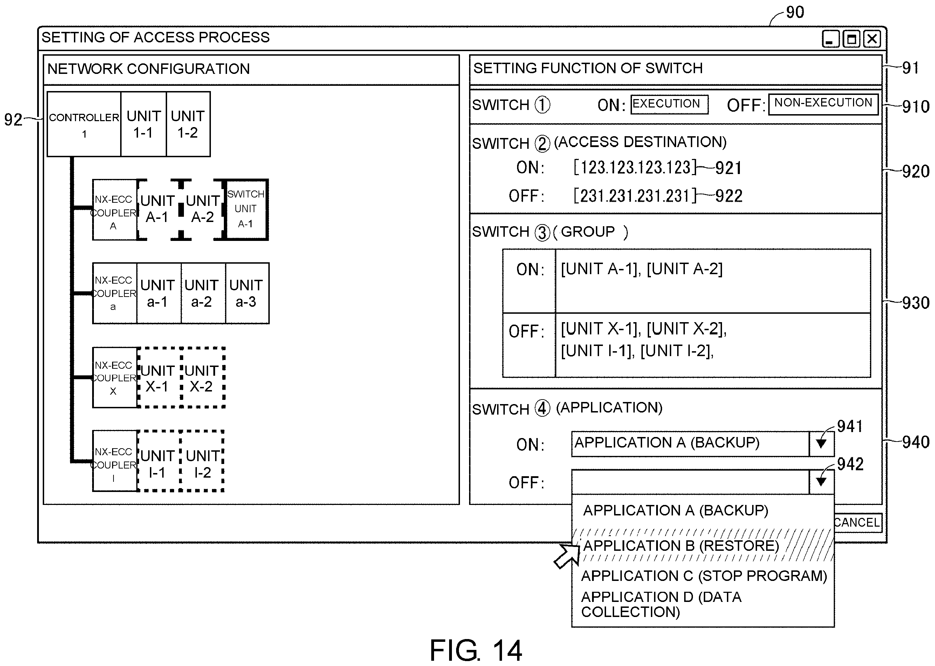

FIG. 14 is a diagram illustrating an example of a screen on the display 614 of the support device 600 that is connected to the CPU unit 100 according to the embodiment. The screen illustrated in FIG. 14 is an example of a screen that is displayed on the display 614 when various settings of the access process are performed. The user can perform various settings according to the screen that is displayed on the display 614.

The setting screen 90 includes a detailed setting screen 91 for setting a function of the switch 30 and a network screen 92 that graphically displays an entire configuration of the network.

Screens are provided according to the number of switches 30 on the detailed setting screen 91. Specifically, a first screen 910 for the first switch 31, a second screen 920 for the second switch 32, a third screen 930 for the third switch 33, a fourth screen 940 for the fourth switch 34 are provided.

For example, the function of each operation of the first switch 31 is displayed on the first screen 910. Input areas 921 and 922 for inputting IP addresses of access destinations at the time of executing the process are provided in the second screen 920. The IP addresses can be input, for example, by operating the keyboard 610. It should be noted that a memory corresponding to the storage unit 400 may be displayed on the network screen 92 and selected with the mouse 612 or the like such that the access destination can be selected.
Further, after the storage unit 400 is selected, a file in the selected storage unit 400 can be designated.

The third screen 930 is a screen for selecting the functional unit 2 that executes the application. Selection of the functional unit 2 that executes the application is performed, for example, by selecting a unit displayed on the network screen 92 using the mouse 612. Further, a configuration in which the selected unit is displayed in a different aspect so that the user can recognize the selected unit may be adopted. Further, a configuration in which a unit selected when "ON" is selected and a unit selected when "OFF" is selected are displayed in different aspects may be adopted.

The fourth screen 940 is a screen for selecting an application that is executed by the functional unit 2. The fourth screen 940 may be configured such that selectable applications are displayed when tabs 941 and 942 are clicked with the mouse 612, and the application is selected from among the displayed applications.

When the function to be assigned to each of the switches 31 to 34 is determined, the support device 600 generates information necessary for realization of the assigned function and transmits the information to the CPU unit 100. The CPU unit 100 transfers the information sent from the support device 600 to each functional unit 2. For example, the support device 600 generates the signal correspondence information 62 and the command correspondence information 26 and transmits the signal correspondence information 62 and the command correspondence information 26 to the CPU unit 100. The CPU unit 100 transfers the signal correspondence information 62 and the command correspondence information 26 to each functional unit 2 and restarts each functional unit 2.

It should be noted that a configuration in which the unit information 63, the group information 64, the memory device information 27, the application information 28, the command generation program 61, the LED lighting program 65, and the application program 29 are transferred to each functional unit 2 each time the setting is changed may be adopted or a configuration in which the unit information 63, the group information 64, the memory device information 27, the application information 28, the command generation program 61, the LED lighting program 65, and the application program 29 are transferred only at the time of initial setting and a determination is made as to whether or not the unit information 63, the group information 64, the memory device information 27, the application information 28, the command generation program 61, the LED lighting program 65, and the application program 29 are transferred according to the changed setting may be adopted. For example, when only the functions assigned to the switches 31 to 34 are changed, the support device 600 may transfer only the signal correspondence information 62 and the command correspondence information 26. On the other hand, when a network configuration has been changed, the support device 600 may transfer the unit information 63, the group information 64, the memory device information 27, the application information 28, the command generation program 61, the LED lighting program 65, and the application program 29, in addition to the signal correspondence information 62 and the command correspondence information 26.

Thus, since the functions of the second switch 32 to the fourth switch 34 can be set from the support device 600, the user can easily change the functions of the second switch 32 to the fourth switch 34. For example, when the functional unit 2 (the IO unit 200) included in the control system 1 is recombined or added, the setting can be easily changed from the support device 600. As a result, it is possible to use the function of each switch 30 without fixing the function, and it is possible to provide the highly versatile switch 30.

It should be noted that although the support device 600 can be connected to the CPU unit 100, a configuration in which the support device 600 can be connected to at least one of the functional units 2 included in the control system 1 may be adopted.

### <F. Example of application>

An example of an application executable in this embodiment will be described.

### (f1. Backup function)

A backup function is a function of storing, in the storage unit 400, the backup data of the setting information 21 stored in the functional unit 2. Specifically, when it is determined that the backup process is to be executed on the basis of the command from the input unit 300, each functional unit 2 transmits the setting information 21 to the CPU unit 100 that is communicatively connected to the storage unit 400. The CPU unit 100 creates backup data and stores the backup date in the storage unit 400.

### (f2. Restoration function)

The restoration function is a function of restoring the setting information 21 stored in the functional unit 2. Specifically, when it is determined that the restoration process is to be executed on the basis of a command from the input unit 300, each functional unit 2 requests the CPU unit 100 communicatively connected to the storage unit 400 to transmit restoration data. The CPU unit 100 specifies the functional unit 2 that has requested the restoration data and generates the restoration data corresponding to the specified functional unit 2 on the basis of the backup data stored in the storage unit 400.

The CPU unit 100 transmits the generated restoration data to the functional unit 2 corresponding to the restoration data. The functional unit 2 overwrites the setting information 21 on the received restoration data.

### (f4. Data collection function)

A data collection function is a function of collecting, for example, data that is sent from a device connected to each functional unit 2 and a log temporarily stored by each functional unit, which is not stored as the backup data. For example, it is possible to store, in the storage unit 400, detailed information on the functional unit 2 necessary when maintenance is performed. The user can store necessary information in the storage unit 400 such as the memory card 410 by operating the input unit 300. Further, a device connected to the functional unit 2 or a function of stopping an operation of the functional unit 2 may be added to the data collection function. Thus, when a trouble has occurred, the user can collect information necessary for investigation of causes of the trouble simultaneously with work for stopping the functional unit 2 or the device.

### (f5. Format function)

A format function is a function of formatting (erasing) the setting information stored in each functional unit 2. For example, in order to initialize the setting of the functional unit 2, the user can erase the setting of the functional unit 2 by selecting the format function.

### <G. Use example>

An example in which the user can instruct the other IO unit 200 to execute the access process of accessing the storage unit 400 by operating the switch 30 will be described below.

### (g1. Backup, restoration, and the like in units of production lines)

For example, it is assumed that one or a plurality of IO units 200 are in operation when one production line is operated, and one or a plurality of CPU units 100 control a plurality of production lines. In this case, a group of IO units 200 that are used for operating one production line is set as one group. This setting makes it possible to switch a production line accessing the storage unit 400 simply by switching the switch 30.

With such a configuration, for example, when setup change has been performed on a production line basis, it is possible to back up or restore only the setting information of the IO unit 200 corresponding to the production line in which the setup change has performed. Further, even when only information on a specific production line is desired to be collected, it is possible to collect only the information of the IO unit 200 corresponding to the production line of which the information is desired to be collected. Moreover, it is possible to stop only the production line in which a trouble has occurred.

### (g2. Backup, restoration, or the like in units of types of IO units 200)

Although the units of the groups are the units of production lines, the units of the groups may be units of types of the IO units 200. For example, the IO unit 200 connected to a specific type of device may be set as one group. Accordingly, when the user upgrades or maintains the specific type of device, the user can perform backup or restoration of the IO unit 200 connected to the specific type of device. In addition, by setting the group as described above, the user can also collect information on the specific type of device at the same timing.

### (g3. Installation of plurality of input units 300)

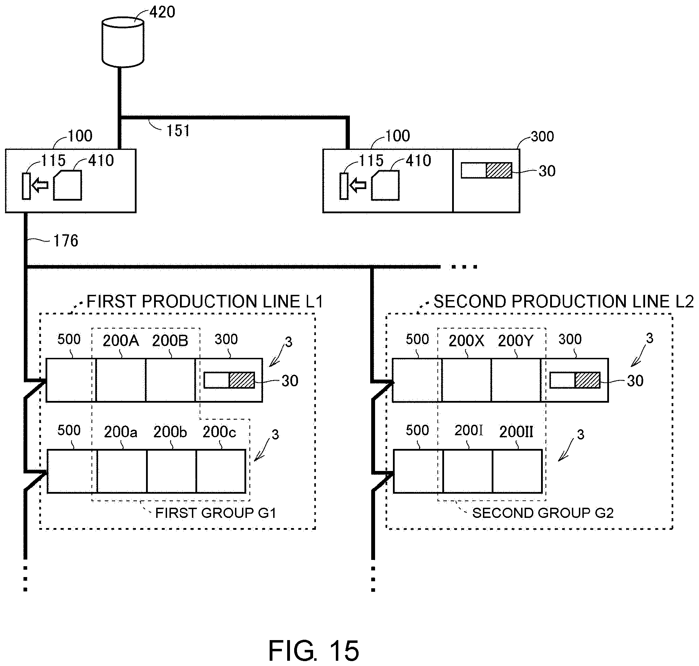

The control system 1 may include a plurality of input units 300. For example, the input unit 300 may be provided for each production line. FIG. 15 is a diagram illustrating an example of the control system 1 including a plurality of input units 300. As illustrated in FIG. 15, the input unit 300 may be provided for each production line L. For example, an instruction to perform a access process for accessing the storage unit 400 is sent from the IO unit 200 in the first group G1 included in the first production line L1 by operating a switch 30 of an input unit 300A provided in a first production line L1. Thus, when the input unit 300 is provided in each production line L, the user can intuitively ascertain that a command is issued to a certain IO unit 200 through an operation with respect to the switch 30.

Further, a switch 30T may be provided in the CPU unit 100B communicatively connected to the CPU unit 100A via the high-level network 151, in addition to the input units 300A and 300B provided in the respective production lines L. In this case, when the switch 30T is operated, a command for an access process may be transmitted to all the IO units 200 communicatively connected to the CPU unit 100A via the field network 176 or/and the internal bus 51.

Further, another input unit 300 may receive a command transmitted from one input unit 300 and determine whether or not the command is to be executed on the basis of the input signal from the switch 30. For example, it is assumed that the IO unit 200 included in each of the first production line L1 and the second production line L2 has been instructed to execute the access process on the basis of the operation with respect to the switch 30T. In this case, the input unit 300A and/or 300B may determine whether or not the IO unit 200 included in the group G1 and/or G2 is instructed to execute the access process on the basis of input signals from the switches 30A and/or 30B.

In addition, in a manufacturing site or the like in which a plurality of control boards having the IO unit 200 disposed therein are installed, the input unit 300 may be provided in each control boa rd.

### <h. Modification examples>

In the embodiment, it is assumed that each of the IO unit 200 and the input unit 300 that can execute the access process has information according to the signal from the switch 30. However, the configuration for receiving the signal from the input unit 300 and realizing that the IO unit 200 executes a process of accessing the storage unit 400 communicatively connected to the CPU unit 100 is not limited thereto.

### (h1. First modification example)

Only the input unit 300 may have the information according to the signal from the switch 30. For example, the input unit 300 may have functions of the command generation unit 611 and the command analysis unit 291 and may be configured to transmit information on an access destination (the memory device information 27) and the application type/setting 281 to each IO unit 200. The application execution unit 295 of each IO unit 200 executes the application on the basis of the application information 28.

In such a configuration, the input unit 300 includes the application information 28 and the memory device information 27. Further, the signal correspondence information 62 stored in the input unit 300 includes information indicating a correspondence relationship between the signal from the second switch 32 and the memory device information 27 and information indicating a correspondence relationship between the signal from the fourth switch 34 and the application information 28. That is, in such a configuration, the input unit 300 can specify the IO unit 200 that executes the access process, content of the access process that is executed by each IO unit 200, and a destination to be accessed by each IO unit 200 on the basis of the signal from the switch 30. Each IO unit 200 executes the access process according to the command from the input unit 300.

It should be noted that the input unit 300 may have information corresponding to an execution condition of the application for each type of application and type of IO unit 200 as the application information 28 or may have only information for each type of application.

In the case of a configuration in which only the input unit 300 has the information according to the signal from the switch 30, it is possible to change the IO unit 200 that executes the access process, change content of a process that is executed as the access process, or change the storage unit 400 that is an access destination simply by changing the setting of the input unit 300.

### (h2. Second modification example)

The input unit 300 does not specify the IO unit 200 that accesses the storage unit 400, but executes a process of determining whether or not each IO unit 200 executes a process of accessing the storage unit 400, which is sent from the input unit 300. That is, the input unit 300 transfers the input signal from the switch 30 in a broadcasting manner and determines that each IO unit 200 having received the input signal executes the access process on the basis of the input signal.

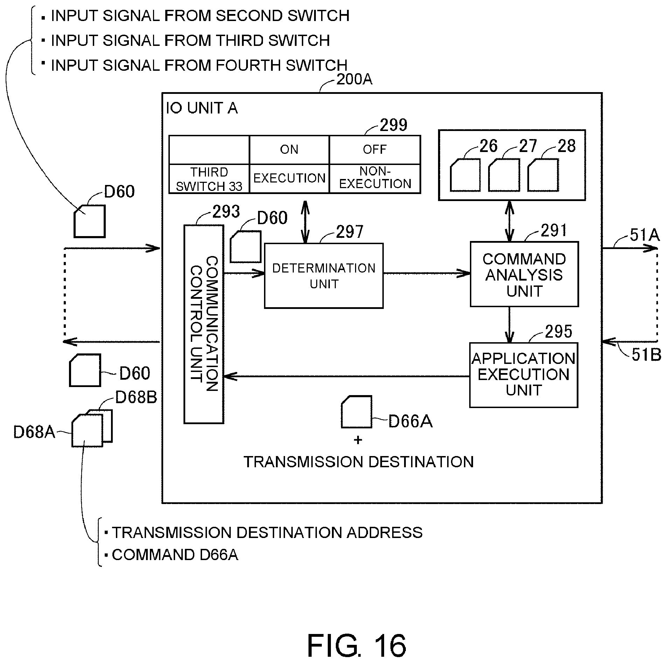

FIG. 16 is a diagram illustrating an example of a functional configuration of the IO unit 200 in a second modification example. In the second modification example, when the input unit 300 has received a signal indicating the execution of the access process from the switch 30, the input unit 300 generates the command D60 capable of specifying input signals from the second switch 32 to the fourth switch 34 and broadcasts the generated command D60 to all the IO units 200 included in the control system 1. The IO unit 200 further includes, for example, a determination unit 297 and determination information 299. The IO unit 200 determines execution of the access process on the basis of information included in the command D60 and the determination information 299. The determination information 299 is, for example, information in which an "ON" signal from the third switch 33 is associated with "execution" of the access process and an "OFF" signal from the third switch 33 is associated with "non-execution" of the access process.

When the determination unit 297 has determined the execution of the access process on the basis of the command D60, the command analysis unit 291 and the application execution unit 295 execute a process of executing the access process. It should be noted that since the content of the process executed by the command analysis unit 291 and the application execution unit 295 overlaps the process described with reference to FIG. 11, description thereof will be omitted.

Further, the IO unit 200 included in the first group causes the access process to be executed when the IO unit 200 has received a command indicating that the third switch 33 is "ON", and the IO unit 200 included in the second group causes the access process to be executed when the IO unit 200 has received a command indicating that the third switch 33 is "OFF".

In the case of a configuration in which each IO unit 200 executes the process of determining whether or not each IO unit 200 executes a process of accessing the storage unit 400, which is sent from the input unit 300, it is possible to change the function of the switch 30 simply by changing the setting of the IO unit 200. As a result, in a control system in which a recombination of functional units is frequent, it is possible to update a setting simply by changing a setting of the recombined functional unit without changing a setting of the first functional unit.

### <I. Others>

Although a unit capable of executing the access process has been described to be the IO unit 200 in the embodiment, the input unit 300, the communication coupler 500, and other types of functional units 2 may be able to execute the access process.

### <J. Advantageous effects>

By operating the switch 30 included in the input unit 300, it is possible to execute at least one of the process of loading the setting information 21 into the storage unit 400 and the process of reading the setting information 21 from the storage unit 400. As a result, it is possible to freely set a place at which an operation for executing an access process is performed independently of an installation place of the CPU unit 100 since the installation place of the input unit 300 does not depend on the installation place of the CPU unit 100.

Further, the switch 30 can be provided in the CPU unit 100, but the number of switches 30 that can be provided in the CPU unit 100 is limited. Since the number of switches 30 that can be provided in the CPU unit 100 is smaller than that of the functional units 2 that can be connected to the CPU unit 100, functions that can be set are limited. On the other hand, in the case of a configuration in which the access process can be executed by connecting the input unit 300 as in the control system 1 of the embodiment, it is possible to set more functions as compared with a case in which the switch 30 is provided in only the CPU unit 100 by increasing the number of input units 300.

Further, it is possible to cause the functional unit 2 that does not include the switch 30 to execute the access process simply by operating the switch 30. In addition, it is possible to instruct functional units 2 present at a separate place to execute the access process at once.

Further, since the access process can be executed according to a physical operation such as an operation with respect to the switch 30, the access process can be executed by an intuitive operation. In particular, when the switch 30 is provided for each functional unit 2 or for each production line L, it is easy for the user to intuitively ascertain which functional unit 2 is an execution target of the access process.

### [Reference Signs List]

- 1: Control system
- 2: Functional unit
- 3: Remote IO device
- 21: Setting information
- 26: Command correspondence information
- 27: Memory device information
- 28: Application Information
- 29: Application program
- 30: Switch
- 31: First switch
- 32: Second switch
- 33: Third switch
- 34: Fourth switch
- 51: Internal bus
- 51A: downlink
- 51B: Uplink
- 61: Command generation program
- 62: Signal correspondence information
- 63: Unit Information
- 64: Group information
- 65: Lighting program
- 91: Detailed setting screen
- 92: Network screen
- 100: CPU unit
- 130: Power supply unit
- 140: Internal bus control unit
- 142: Transmission circuit
- 143: Internal path communication controller
- 144: Reception circuit
- 145: Storage device
- 151: High-level network
- 161: Connection cable
- 170: Field bus control unit
- 171: Field bus communication controller
- 173: Memory controller
- 176: Field network
- 216: 10 module
- 240: Reception processing unit
- 242: Decoding unit
- 244: CRC check unit
- 250: Transmission processing unit
- 252: CRC generation unit
- 254: Encoding unit
- 272: IP address
- 273: File information
- 281: Application type/setting
- 291: Command analysis unit
- 292: Backup program
- 294: Restoration program
- 295: Application execution unit
- 296: Stop program
- 297: Determination unit
- 298: Command analysis program
- 299: Determination information
- 400: Storage unit
- 410: Memory card
- 115: Memory card 1F
- 420: Server
- 500: Communication coupler
- 512: System program
- 514: Configuration information
- 600: Support device
- 610: Keyboard
- 611: Command generation unit
- 612: Mouse
- 614: Display
- 616: Driving unit
- 641: Group setting information
- 650: Support program
- 651: Lighting control unit
- 660: User program
- 690: CD-ROM
- 90: Setting screen.

## Claims

1. A control system (1) comprising:
a storage unit (400);
a controller (100) communicatively connected to the storage unit (400); and
a plurality of functional units (2) adapted to operate on the basis of predetermined setting information (21) which are communicatively connected to the controller (100),
wherein the plurality of
functional units (2) include a first functional unit (300) including an input portion (30) adapted to receive a user operation for execution of an access process for accessing the storage unit (400) from a specific one or a plurality of the plurality of functional units (2); wherein the first functional unit (300) is adapted to generate a command (D60) for executing the access process when the input portion (30) receives the user operation, and the plurality of functional units (2) include
a second functional unit (200, 200a, 200A, 200b, 200B, 200c, 2001, 200II, 200X, 200Y) designated according to the user operation received by the input portion (30) for executing the access process according to the command (D60), wherein the access process comprises at least one of a process of loading the setting information (21) of the second functional unit (200, 200a, 200A, 200b, 200B, 200c, 2001, 200II, 200X, 200Y) into the storage unit (400) and a process of reading the setting information (21) from the storage unit (400),
wherein the storage unit (400) includes an external memory directly connectable to the controller (100) or a server connected to the controller (100) via a network or an internal memory included in the controller (100),
wherein the first functional unit (300) is adapted to transmit the command (D60) to functional units (2) among the plurality of functional units (2) different from the first functional unit (300), and
wherein each of the functional units (2) among the plurality of functional units (2) different from the first functional unit (300) is adapted to determine whether or not to execute the access process for accessing the storage unit (400) on the basis of the command (D60).

2. The control system (1) according to claim 1, wherein when the first functional unit (300) generates the command (D60), the first functional unit (300) is adapted to specify the second functional unit (200, 200a, 200A, 200b, 200B, 200c, 2001, 200II, 200X, 200Y) on the basis of association information (62) corresponding to the user operation received by the input portion (30), and is adapted to transmit the command (D60) to the second functional unit (200, 200a, 200A, 200b, 200B, 200c, 2001, 200II, 200X, 200Y).

3. The control system (1) according to any one of claims 1 to 2, wherein the storage unit (400) comprises a plurality of storage units (410, 420),
wherein the input portion (30) is further adapted to receive a selection of a storage unit (410, 420) among the plurality of storage units (410, 420) that is accessed by the second functional unit (200, 200a, 200A, 200b, 200B, 200c, 2001, 200II, 200X, 200Y), and
the second functional unit (200, 200a, 200A, 200b, 200B, 200c, 2001, 200II, 200X, 200Y) is adapted to execute the access process for accessing the storage unit (410, 420) selected by the input portion (30) according to the command (D60).

4. The control system (1) according to any one of claims 1 to 3, wherein the input portion (30) further is adapted to receive a designation of a plurality of functional units (2) among the plurality of functional units (2) as the second functional unit (200, 200a, 200A, 200b, 200B, 200c, 2001, 200II, 200X, 200Y).

5. The control system (1) according to any one of claims 1 to 4, wherein the first functional unit (300) further includes a notification portion (315) capable of notifying of an execution situation of the access process.

## Patentansprüche

1. Steuersystem (1), das Folgendes umfasst:
eine Speichereinheit (400);
eine Steuereinheit (100), die mit der Speichereinheit (400) kommunikationstechnisch gekoppelt ist; und
mehrere funktionale Einheiten (2), die ausgelegt sind, auf der Grundlage vorgegebener Einstellungsinformationen (21) zu arbeiten, die mit der Steuereinheit (100) kommunikationstechnisch gekoppelt sind,
wobei die mehreren funktionalen Einheiten (2) eine erste funktionale Einheit (300) enthalten, die einen Eingabeabschnitt (30) enthält, der ausgelegt ist, eine Anwenderbedienung zur Ausführung eines Zugriffsprozesses zum Zugreifen auf die Speichereinheit (400) von einer bestimmten oder mehreren der mehreren funktionalen Einheiten (2) zu empfangen;
wobei die erste funktionale Einheit (300) ausgelegt ist, einen Befehl (D60) zum Ausführen des Zugriffsprozesses zu erzeugen, wenn der Eingabeabschnitt (30) die Anwenderbedienung empfängt, und
die mehreren funktionalen Einheiten (2) eine zweite funktionale Einheit (200, 200a, 200A, 200b, 200B, 200c, 200C, 200I, 200II, 200X, 200Y) enthalten, die gemäß der Anwenderbedienung, die durch den Eingabeabschnitt (30) empfangen wird, zum Ausführen des Zugriffsprozesses gemäß dem Befehl (D60) bezeichnet wird, wobei der Zugriffsprozess einen Prozess des Ladens der Einstellungsinformationen (21) der zweiten funktionalen Einheit (200, 200a, 200A, 200b, 200B, 200c, 200C, 200I, 200II, 200X, 200Y) in die Speichereinheit (400) und/oder einen Prozess des Lesens der Einstellungsinformationen (21) aus der Speichereinheit (400) umfasst,
wobei die Speichereinheit (400) einen externen Datenspeicher, der direkt mit der Steuereinheit (100) verbunden werden kann, oder einen Server, der über ein Netz mit der Steuereinheit (100) verbunden ist, oder einen internen Datenspeicher, der in der Steuereinheit (100) enthalten ist, enthält,
wobei die erste funktionale Einheit (300) ausgelegt ist, den Befehl (D60) an funktionale Einheiten (2) von den mehreren funktionalen Einheiten (2) zu übertragen, die von der ersten funktionalen Einheit (300) verschieden sind, und
wobei jede der funktionalen Einheiten (2) von den mehreren funktionalen Einheiten (2), die von der ersten funktionalen Einheit (300) verschieden ist, ausgelegt ist, auf der Grundlage des Befehls (D60) zu bestimmen, ob der Zugriffsprozess zum Zugreifen auf die Speichereinheit (400) ausgeführt werden soll oder nicht.

2. Steuersystem (1) nach Anspruch 1, wobei dann, wenn die erste funktionale Einheit (300) den Befehl (D60) erzeugt, die erste funktionale Einheit (300) ausgelegt ist, die zweite funktionale Einheit (200, 200a, 200A, 200b, 200B, 200c, 200C, 200I, 200II, 200X, 200Y) auf der Grundlage von Zuordnungsinformationen (62) zu spezifizieren, die der Anwenderbedienung entsprechen, die durch den Eingabeabschnitt (30) empfangen wird, und ausgelegt ist, den Befehl (D60) an die zweite funktionale Einheit (200, 200a, 200A, 200b, 200B, 200c, 200C, 200I, 200II, 200X, 200Y) zu übertragen.

3. Steuersystem (1) nach einem der Ansprüche 1 bis 2, wobei die Speichereinheit (400) mehrere Speichereinheiten (410, 420) umfasst,
wobei der Eingabeabschnitt (30) ferner ausgelegt ist, eine Auswahl einer Speichereinheit (410, 420) von den mehreren Speichereinheiten (410, 420), auf die durch die zweite funktionale Einheit (200, 200a, 200A, 200b, 200B, 200c, 200C, 200I, 200II, 200X, 200Y) zugegriffen wird, zu empfangen, und
die zweite funktionale Einheit (200, 200a, 200A, 200b, 200B, 200c, 200C, 200I, 200II, 200X, 200Y) ausgelegt ist, den Zugriffsprozess zum Zugreifen auf die Speichereinheit (410, 420), die durch den Eingabeabschnitt (30) ausgewählt wird, gemäß dem Befehl (D60) auszuführen.

4. Steuersystem (1) nach einem der Ansprüche 1 bis 3, wobei der Eingabeabschnitt (30) ferner ausgelegt ist, eine Bezeichnung mehrerer funktionaler Einheiten (2) von den mehreren funktionalen Einheiten (2) als die zweite funktionale Einheit (200, 200a, 200A, 200b, 200B, 200c, 200C, 200I, 200II, 200X, 200Y) zu empfangen.

5. Steuersystem (1) nach einem der Ansprüche 1 bis 4, wobei die erste funktionale Einheit (300) ferner einen Meldungsabschnitt (315) enthält, der eine Ausführungssituation des Zugriffsprozesses melden kann.

## Revendications

1. Système de commande (1) comportant :
une unité de stockage (400) ;
une commande (100) connectée à l'unité de stockage (400) de manière communicante ; et
une pluralité d'unités fonctionnelles (2) adaptées pour fonctionner sur la base d'informations de paramétrage (21) prédéterminées, qui sont connectées à la commande (100) de manière communicante,
dans lequel les unités de la pluralité d'unités fonctionnelles (2) incluent une première unité fonctionnelle (300) incluant une partie d'entrée (30) adaptée pour recevoir une opération d'utilisateur en vue d'une exécution d'un processus d'accès pour accéder à l'unité de stockage (400) à partir d'une unité spécifique ou d'une pluralité de la pluralité d'unités fonctionnelles (2) ;
dans lequel la première unité fonctionnelle (300) est adaptée pour générer une instruction (D60) pour exécuter le processus d'accès lorsque la partie d'entrée (30) reçoit l'opération d'utilisateur, et les unités de la pluralité d'unités fonctionnelles (2) incluent une seconde unité fonctionnelle (200, 200a, 200A, 200b, 200B, 200c, 200I, 200II, 200X, 200Y) désignée en fonction de l'opération d'utilisateur reçue par la partie d'entrée (30) pour exécuter le processus d'accès en fonction de l'instruction (D60), dans lequel le processus d'accès comporte au moins un processus parmi un processus de chargement des informations de paramétrage (21) de la seconde unité fonctionnelle (200, 200a, 200A, 200b, 200B, 200c, 200I, 200II, 200X, 200Y) dans l'unité de stockage (400) et un processus de lecture des informations de paramétrage (21) à partir de l'unité de stockage (400),
dans lequel l'unité de stockage (400) inclut une mémoire externe pouvant être directement connectée à la commande (100) ou un serveur connecté à la commande (100) via un réseau ou une mémoire interne incluse dans la commande (100),
dans lequel la première unité fonctionnelle (300) est adaptée pour transmettre l'instruction (D60) à des unités fonctionnelles (2) parmi la pluralité d'unités fonctionnelles (2) différentes de la première unité fonctionnelle (300), et
dans lequel chacune des unités fonctionnelles (2) parmi la pluralité d'unités fonctionnelles (2) différentes de la première unité fonctionnelle (300) est adaptée pour déterminer s'il faut exécuter ou non le processus d'accès pour accéder à l'unité de stockage (400) sur la base de l'instruction (D60).

2. Système de commande (1) selon la revendication 1, dans lequel lorsque la première unité fonctionnelle (300) génère l'instruction (D60), la première unité fonctionnelle (300) est adaptée pour spécifier la seconde unité fonctionnelle (200, 200a, 200A, 200b, 200B, 200c, 200I, 200II, 200X, 200Y) sur la base d'informations d'association (62) correspondant à l'opération d'utilisateur reçue par la partie d'entrée (30), et est adaptée pour transmettre l'instruction (D60) à la seconde unité fonctionnelle (200, 200a, 200A, 200b, 200B, 200c, 200I, 200II, 200X, 200Y).

3. Système de commande (1) selon l'une quelconque des revendications 1 à 2, dans lequel l'unité de stockage (400) comporte une pluralité d'unités de stockage (410, 420), dans lequel la partie d'entrée (30) est en outre adaptée pour recevoir une sélection d'une unité de stockage (410, 420) parmi la pluralité d'unités de stockage (410, 420) qui font l'objet d'un accès par la seconde unité fonctionnelle (200, 200a, 200A, 200b, 200B, 200c, 200I, 200II, 200X, 200Y), et
la seconde unité fonctionnelle (200, 200a, 200A, 200b, 200B, 200c, 200I, 200II, 200X, 200Y) est adaptée pour exécuter le processus d'accès pour accéder à l'unité de stockage (410, 420) sélectionnée par la partie d'entrée (30) d'après l'instruction (D60).

4. Système de commande (1) selon l'une quelconque des revendications 1 à 3, dans lequel la partie d'entrée (30) est en outre adaptée pour recevoir une désignation d'une pluralité d'unités fonctionnelles (2) parmi la pluralité d'unités fonctionnelles (2) comme étant la seconde unité fonctionnelle (200, 200a, 200A, 200b, 200B, 200c, 200I, 200II, 200X, 200Y).

5. Système de commande (1) selon l'une quelconque des revendications 1 à 4, dans lequel la première unité fonctionnelle (300) inclut en outre une partie de notification (315) capable de notifier une situation d'exécution du processus d'accès.
